Europäisches Patentamt

European Patent Office

Office européen des brevets

(19)

(11) Veröffentlichungsnummer: **0 003 746**
**B1**

(12)

# EUROPÄISCHE PATENTSCHRIFT

(45) Veröffentlichungstag der Patentschrift: **25.11.81**

(51) Int. Cl.³: **F 16 L 37/08**

(21) Anmeldenummer: **79100138.1**

(22) Anmeldetag: **18.01.79**

(54) Steckarmatur.

(30) Priorität: **22.02.78 DE 2807508**

(43) Veröffentlichungstag der Anmeldung:
**05.09.79 Patentblatt 79/18**

(45) Bekanntmachung des Hinweises auf die Patenterteilung:
**25.11.81 Patentblatt 81/47**

(84) Benannte Vertragsstaaten:
**BE FR GB IT LU NL**

(56) Entgegenhaltungen:
**DE - A - 2 025 474**
**FR - A - 2 394 737**
**US - A - 2 458 874**

(73) Patentinhaber: **Armaturenfabrik Hermann Voss
GmbH & Co.
D-5272 Wipperfürth (DE)**

(72) Erfinder: **Kohlgrüber, Rudolf
Engelbertusstrasse 2
D-5253 Lindlar-Frielingsdorf (DE)**

(74) Vertreter: **Solf, Alexander, Dr. et al,
Patentanwälte Dr. Solf & Zapf Postfach 13 02 19
D-5600 Wuppertal 1 (DE)**

Courier Press, Leamington Spa, England.

Steckarmatur

Die Erfindung betrifft eine Steckarmatur zum schnellen und lösbaren Anschluß einer Rohrleitung mit außen glattem Endbereich, insbesondere einer Kunststoffleitung, bestehend aus einem Stutzen mit einer Dichtungskammer mit eingelegtem Dichtring und axial verschiebbarer, am freien Ende angeordneter Distanzbuchse, einem Gehäuse mit einem Innenkonus, einer Spannzange mit einem Außenkonus, einem Innenkonus und mit Haltezähnen, wobei das Gehäuse innen die Spannzange aufnimmt, und einem mit dem Innenkonus der Spannzange beim Entkuppeln der Rohrleitung zusammenwirkenden Außenkonus.

Derartige Armaturen dienen zum lösbaren Anschluß von insbesondere aus halbstarren Kunststoffrohren bestehenden Leitungen mit außen glatten Endbereichen für gasförmige und flüssige Medien, beispielsweise zur Ausrüstung von miniaturisierten pneumatischen Bauteilen. Sie sollen das angeschlossene Kunststoffrohr an zwei möglichst weit auseinanderliegenden Bereichen, am vorderen Ende und im Bereich der Spannzange radial derart stützen, daß Biegebeanspruchungen weder die Dichtwirkung des Dichtrings, noch die Haltekraft der Spannzange beeinträchtigen können. Die Distanzbuchse übernimmt dabei den Schutz des elastischen Dichtringes. Das Lösen des Kunststoffrohres aus dem Anschlußteil kann durch axiales Verschieben und Spreizen der Spannzange erfolgen.

Aufgabe der Erfindung ist, das funktionelle Zusammenwirken der Einzelteile der Steckarmatur zu verbessern und insbesondere die Montage und die Lösbarkeit zu vereinfachen.

Diese Aufgabe wird bei einer Steckarmatur der eingangs beschriebenen Art dadurch gelöst, daß der mit dem Innenkonus der Spannzange beim Entkuppeln der Rohrleitung zusammenwirkende Außenkonus am gehäuseseitigen Endbereich des Stutzens angeordnet ist, und die Endkante des Außenkonus einen geringfügig kleineren Durchmesser als die Endkante des Innenkonus aufweist und daß der Endbereich des Gehäuses einen elastischen Bereich mit endseitigem Ringbund aufweist, der beim Zusammenstecken über den Außenkonus des Stutzens aufweitbar gleitet und in eine Ringnut des Stutzens einschnappt. Diese Ausgestaltung der neuen Steckarmatur gewährleistet in besonderem Maße die Dichtfunktion und Lösbarkeit.

Aus der DE—A—20 25 474 ist zwar eine Steckarmatur bekannt, bei der Dichtring und Distanzbuchse in der gleichen Kammer des dem Stutzen entsprechenden Teils untergebracht sind. Die gegenüber dem Kunststoffrohr frei verschiebbare Distanzbuchse dient dabei einerseits als Schutzglied für den Dichtring, indem sie ein Zerschneiden des Dichtringes an den scharfen Schlitzkanten der Spannzange verhindert, wenn aufgrund eines hohen Flüssigkeits- oder Gasdrucks der elastische Dichtring sich verformt. Andererseits übernimmt die Distanzbuchse die Aufgabe, die Kräfte des Flüssigkeits- oder Gasdrucks auf die Spannzange zu übertragen und dient dabei als Anschlag. Ferner soll die Distanzbuchse das Spreizen der Spannzange beim Lösen der Steckverbindung gewährleisten. Hierbei treten jedoch Kräfte auf, die den Dichtring zerstören können. Außerdem sind die zum Lösen dienenden Konuswinkel so stumpf, daß hohe Kräfte zum Lösen aufgebracht werden müssen. Insbesondere dieser Nachteil wird durch die erfindungsgemäße Kombination behoben.

Ferner ist aus der US—A—2 458 874 eine Rohrkupplung bekannt, im wesentlichen bestehend aus einem Gehäuse, einem Stutzen, einer Spannzange, einer Distanzbuchse und einem Dichtungsring, wobei die Distanzbuchse unverrückbar vor der Dichtungsringkammer angeordnet ist und einen bogenförmigen Endbereich zum Aufweiten der Spannzange aufweist. Darüber hinaus ist der vordere Endbereich des Gehäuses zur Verankerung auf dem Stutzen umgebördelt, wobei der Bördelrand hakenartig hinter den Rand einer Umfangsnut des Stutzens greift.

Nach einer besonderen Ausführungsform der Erfindung weist der Anschlußteil des Stutzens außenseitig eine abgestufte Ringnut für den Schnappverschluß auf und gehäuseseitig schließt sich ein zylindrischer Kammerwandbereich an, der in einem Außenkonus am gehäuseseitigen Endbereich des Stutzens ausläuft, dessen Konuswinkel insbesondere zwischen 65 bis 75°, vorzugsweise um 70° beträgt.

Weitere erfindungswesentliche Merkmale sind Gegenstand der Unteransprüche 3 bis 5.

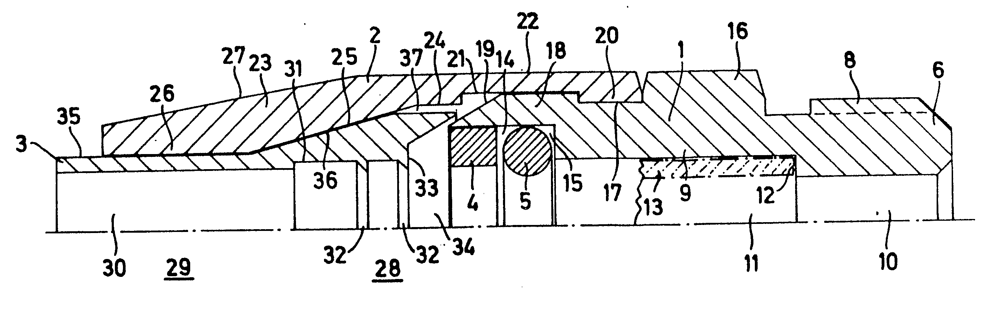

Anhand der Zeichnung wird die Erfindung beispielhaft näher erläutert. Die Abbildung zeigt einen Schnitt durch die erfindungsgemäße Steckarmatur.

Die neue Steckarmatur besteht im wesentlichen aus dem Stutzen 1, dem Gehäuse 2, der Spannzange 3, der Distanzbuchse 4 und dem elastischen Dichtring 5, der als 0-Ring ausgebildet ist.

Der Stutzen 1 weist vorzugsweise einen Verbindungsteil 6 mit Gewinde 8 sowie den damit einstückig verbundenen Anschlußteil 9 auf. In der Bohrung 10 des Stutzens 1 ist verbindungsteilseitig eine abgestufte erweiterte Bohrung 11 vorgesehen, deren Bohrstufenkante 12 als Anschlag für das anzuschließende Rohr 13 dient. Spannzangenseitig schließt sich an die Bohrung 11 die abgestufte erweiterte Kammerbohrung als Dichtkammer 14 an. In der Kammer 14 sitzen der Dichtring 5 und davor frei verschiebbar die Distanzbuchse 4, wobei der Dichtring 5 als Gegenlager die Bohrstufe 15 vorfindet.

Außenseitig trägt der Anschlußteil 9 — wie üblich — einen Außensechskant 16. Daran schließt sich gehäuseseitig eine abgestufte Ringnut 17 für den Schnappverschluß an. Es folgt der zylindrische Kammerwandbereich 18, der in einem Außenkonus ausläuft, dessen Konuswinkel insbesondere zwischen 66 bis 75, vorzugsweise um 70°, beträgt.

Das Gehäuse 2 rastet auf dem Stutzen 1, wobei der ringförmige Innenrand 20 bei der Montage in die Ringnut 17 schnappt. Zur Vergrößerung der Elastizität des Schnappbereichs 22 des Gehäuses läuft die Hinterdrehung 21 des Innenrandes 20 entsprechend weiter zum Spannzangenaufnahmebereich 23. Der Spannzangenaufnahmebereich 23 geht außenseitig in einen Außenkonus 27 mit einem Konuswinkel von vorzugsweise etwa 20° über.

Innen schließt sich an die Hinterdrehung 21 zunächst eine zylindrische Bohrung 24 an, die in den Innenkonus 25 übergeht, dessen Konuswinkel vorzugsweise etwa bei 30° liegt. Dem Innenkonus folgt eine weitere zylindrische Bohrung 26. Die Winkel des Außenkonus' 27 und des Innenkonus' 25 sind optimiert aufeinander abgestimmt.

Im Spannzangenbereich 23 des Gehäuses 2 sitzt längsverschiebbar die Spannzange 3. Diese ist zumindest im Haltebereich 28 — wie üblich — geschlitzt (nicht dargestellt). An die zylindrische Bohrung 30 des Stützbereichs 29 der Spannzange schließt sich eine abgestufte zylindrische Hinterdrehung 31 an, die so lang gewählt wird, daß sich die gewünschte Spreizelastizität des geschlitzten Bereichs der Spannzange ergibt. In der Hinterdrehung 31 sind — wie üblichmehrere spitze Haltezähne 32 bzw. Zahnkanten ringförmig am Umfang angeordnet, die widerhakenartig ausgebildet sind und daher vorzugsweise stutzenseitig eine zur Längsachse der Armatur rechtwinklig verlaufende Kante 33 aufweisen. Dadurch ergibt die Ausbildung der Zähne 32 im Querschnitt die Form eines rechtwinkligen Dreiecks. Nach einer bevorzugten Ausführungsform ist der Innendurchmesser der Spannzange 3 im Bereich der Zahnschneiden 32 kleiner als der Außendurchmesser des Kunststoffrohres 12 bzw. kleiner als der Innendurchmesser der Bohrungen 11 und 30.

An den letzten Haltezahn 32 schließt sich zum Ende hin der kelchförmig sich erweiternde Innenkonus 34 an, dessen Konuswinkel dem Konuswinkel des Außenkonus' 19 des Stutzens 1 entspricht, wobei der Durchmesser der Endkante des Außenkonus' 19 geringfügig kleiner ist als der Durchmesser der Endkante des Innenkonus' 34 und im Schnappzustand beide Kanten sich vorzugsweise etwas überlappen (wie dargestellt).

Außenseitig schließt sich an den zylindrischen Außenmantel 35 des Stützbereichs 29 der Außenkonus 36 an, dessen Konuswinkel dem Konuswinkel des Innenkonus' 25 des Gehäuses 2 entspricht. Dem Außenkonus 36 folgt ein zylindrischer Bereich 37, der der zylindrischen Bohrung 24 im Gehäuse im Abstand zur Gewährleistung eines radialen Spreizweges für den geschlitzten Bereich der Spannzange gegenüberliegt.

Die neue Armatur ist leicht zu montieren und arretiert die Teile sicher durch den Schnappverschluß. Die Form der Haltezähne sichert das ungewollte Lösen der Verbindung zusammen mit dem Aufeinanderliegen der beiden Konusflächen des Konus' 25 und des Konus' 36. Das gewünschte einfache Lösen der Verbindung erfolgt durch das axiale Verschieben der Spannzange nach innen, wozu nur geringe Kräfte benötigt werden, da der spitzwinklige Konus 34 auf dem entsprechend spitzwinkligen Konus 19 gleiten kann, so daß der Haltebereich 28 der Spannzange gespreizt wird.

Durch die neue Anordnung der Einzelteile der Steckarmatur ist eine Schnellspann-Verbindung geschaffen worden, die nur einen sehr geringen Raumbedarf erfordert.

## Patentansprüche

1. Steckarmatur zum schnellen und lösbaren Anschluß einer Rohrleitung (13) mit außen glattem Endbereich, insbesondere einer Kunststoffleitung, bestehend aus

a) einem Stutzen (1) mit einer Dichtungskammer (14) mit eingelegtem Dichtring (5) und axial verschiebbarer, am freien Ende angeordneter Distanzbuchse (4),

b) einem Gehäuse (2) mit einem Innenkonus (25),

c) einer Spannzange (3) mit einem Außenkonus (36), einem Innenkonus (34) und mit Haltezähnen (32), wobei das Gehäuse (2) innen die Spannzange (3) aufnimmt,

d) und einem mit dem Innenkonus (34) der Spannzange (3) beim Entkuppeln der Rohrleitung (13) zusammenwirkenden Außenkonus (19), dadurch gekennzeichnet, daß

e) der mit dem Innenkonus (34) der Spannzange (3) beim Entkuppeln der Rohrleitung (13) zusammenwirkende Außenkonus (19) am gehäuseseitigen Endbereich des Stutzens (1) angeordnet ist, und die Endkante des Außenkonus (19) einen geringfügig kleineren Durchmesser als die Endkante des Innenkonus (34) aufweist

f) und daß der Endbereich des Gehäuses (2) einen elastischen Bereich (22) mit endseitigem Ringbund (20) aufweist, der beim Zusammenstecken über den Außenkonus (19) des Stutzens (1) aufweitbar gleitet und in eine Ringnut (17) des Stutzens (1) einschnappt.

2. Steckarmatur nach Anspruch 1, dadurch gekennzeichnet, daß der Anschlußteil (9) des Stutzens (1) außenseitig eine abgestufte Ringnut (17) für den Schnappverschluß aufweist, und sich gehäuseseitig ein zylindrischer Kammerwandbereich (18) anschließt, der in einem Außenkonus (19) am gehäuseseitigen Endbereich des Stutzens (1) ausläuft, dessen Konuswinkel insbesondere zwischen 65° bis 75°, vorzugsweise um 70° beträgt.

3. Steckarmatur nach Anspruch 1 oder 2, dadurch gekennzeichnet, daß zur Vergrößerung der Elastizität des Schnappbereichs (22) des Gehäuses eine Hinterdrehung (21) des Innenrandes (20) entsprechend zum Spannzangenaufnahmebereich (23) weiterläuft.

4. Steckarmatur nach Anspruch 3, dadurch gekennzeichnet, daß sich an die Hinterdrehung (21) des Innenrandes (20) zunächst eine zylindrische Bohrung (24) anschließt, die in einen Innenkonus (25) übergeht, dessen Konuswinkel vorzugsweise etwa bei 30° liegt und daß dem Innenkonus eine weitere zylindrische Bohrung (26) folgt, wobei die Winkel des Außenkonus (27) und des Innenkonus (25) des Gehäuses (2) aufeinander abgestimmt sind und daß sich außenseitig an den zylindrischen Außenmantel (35) des Schlitzbereichs (29) der Spannzange (3) ein Außenkonus (36) anschließt, dessen Konuswinkel dem Konuswinkel des Innenkonus (25) des Gehäuses (2) entspricht und daß dem Außenkonus (36) ein zylindrischer Bereich (37) folgt, der der zylindrischen Bohrung (24) im Gehäuse im Abstand zur Gewährleistung eines radialen Spreizweges für den geschlitzten Bereich der Spannzange (3) gegenüberliegt.

5. Steckarmatur nach einem oder mehreren der Ansprüche 1 bis 4, dadurch gekennzeichnet, daß sich die Endkante des Außenkonus (19) am gehäuseseitigen Endbereich des Stutzens (1) und die Endkante des Innenkonus (34) der Spannzange (3) im Schnappzustand etwas überlappen.

## Claims

1. Plug fitting for rapid and detachable connection of a pipe duct (13) with externally smooth end region, particularly a duct of synthetic material, consisting of

(a) a stub (1) with a sealing chamber (14) with inserted sealing ring (5) and axially displaceable spacer bush (4) arranged at the free end,

(b) a housing (2) with an internal cone (25),

(c) a collet (3) with an external cone (36), an internal cone (34) and with retaining teeth (32), wherein the housing (2) receives the collet (3) internally,

(d) and an external cone (19) co-operating with the internal cone (34) of the collet (3) during the uncoupling of the pipe duct (13), characterised thereby, that

(e) the external cone (19), which co-operates with the internal cone (34) of the collet (3) during the uncoupling of the pipe duct (13), is arranged at the housing-sided end region of the stub (1) and the end edge of the external cone (19) displays a slightly smaller diameter than the end edge of the internal cone (34),

(f) and that the end region of housing (2) displays an elastic region (22) with end-sided annular collar (20), which during the plugging together slides enlargeably over the external cone (19) of the stub (1) and snaps into an annular groove (17) of the stub (1).

2. Plug fitting according to claim 1, characterised thereby, that the connecting part (9) of the stub (1) at the outside displays a stepped annular groove (17) for the snap fastening and is adjoined at the housing side by a cylindrical chamber wall region (18), which at the housing-sided end region of the stub (1) runs out into an external cone (19), the cone angle of which amounts particularly to between 65° to 75°, preferably about 70°.

3. Plug fitting according to claim 1 or 2, characterised thereby, that an undercut (21) of the internal rim (20) appropriately runs further to the collet reception region (23) to increase the elasticity of the snap region (22) of the housing.

4. Plug fitting according to claim 3, characterised thereby, that next adjoining the undercut (21) of the internal rim (20) is a cylindrical bore (24), which passes over into an internal cone (25), the cone angle of which preferably lies at about 30°, and that a further cylindrical bore (26) follows the internal cone, wherein the angles of the external cone (27) and of the internal cone (25) of the housing (2) are matched to each other, and that adjoining the cylindrical outer envelope (35) of the slot region (29) of the collet (3) externally is an external cone (36), the cone angle of which corresponds to the cone angle of the internal cone (25) of the housing (2), and that the external cone (36) is followed by a cylindrical region (37), which at a spacing lies opposite the cylindrical bore (24) in the housing to assure a radial splaying travel for the slotted region of the collet (3).

5. Plug fitting according to one or more of the claims 1 to 4, characterised thereby, that the end edge of the external cone (19) at the housing-sided end region of the stub (1) and the end edge of the internal cone (34) of the collet (3) overlap each other somewhat in the snapped state.

## Revendications

1. Garniture enfichable pour le raccord rapide et démontable d'un tuyau (13) à zone d'extrémité lisse extérieurement, en particulier un tuyau en matière plastique, comprenant:

a) un manchon (1) ménageant une chambre d'étanchéité (14) logeant un joint annulaire (5) et une douille d'espacement (4) déplaçable axialement et disposée à l'extrémité libre,

b) un boîtier (2) à cône interne (25),

c) une pince de contrainte (3) présentant un cône externe (36), un cône interne (34) et des dents de maintien (32), la pince de contrainte (3) étant logée dans le boîtier (2),

d) et un cône externe (19), coopérant avec le cône interne (34) de la pince de contrainte (3) lors du désaccouplement du tuyau (13), caractérisée en ce que:

e) le cône externe (19), coopérant avec le cône interne (34) de la pince de contrainte (3) lors du désaccouplement du tuyau (13), est disposé dans la zone d'extrémité côté boîtier du manchon (1), le bord d'extrémité du cône externe (19) présentant un diamètre légèrement plus petit que le bord d'extrémité du cône interne (34), et

f) la zone d'extrémité du boîtier (2) présente une zone élastique (22) avec un collet annulaire (20) du côté de l'extrémité, qui glisse en s'écartant sur le cône externe (19) du manchon (1) lors de l'enfichage et qui s'encliquète dans une gorge annulaire (17) du manchon (1).

2. Garniture enfichable selon re revendication 1, caractérisée en ce que la partie de raccordement (9) du manchon (1) présente extérieurement une gorge annulaire (17) en gradin pour la fermeture à déclic ou encliquetage, et qu'elle se raccorde du côté boîtier à une zone (18) cylindrique de la paroi de chambre, qui se prolonge par un cône extérieur (19) sur la zone d'extrémité côte boîtier du manchon, dont l'angle de cône est compris entre 65° et 75°, en étant avantageusement égal à 70°.

3. Garniture enfichable selon la revendication 1 ou la revendication 2, caractérisée en ce que, pour augmenter l'élasticité de la zone (22) à déclic du boîtier, une dépouille (21) du bord interne (20) s'étend en correspondance de la zone (23) de réception de la pince de contrainte.

4. Garniture enfichable selon la revendication 3, caractérisée en ce qu'à la dépouille (21) du collet interne (20) fait suite tout d'abord un alésage cylindrique (24) suivi par un cône interne (25) dont l'angle de cône est avantageusement environ de 30°, en ce que le cône interne est suivi par un autre alésage cylindrique (26), les angles du cône externe (27) et du cône interne (25) du boîtier (2) se correspondant l'un l'autre, en ce qu'un cône externe (36) fait suite du côté externe à la paroi (35) cylindrique externe de la zone fendue (29) de la pince de contrainte (3), l'angle du cône externe (36) correspondant à l'angle du cône interne (25) du boîtier (2), et en ce que le cône externe (36) est suivi par une zone cylindrique (37) qui fait face à l'éloignement à l'alésage cylindrique (24) du boîtier, pour fournir un trajet d'écartement radial à la zone fendue de la pince de contrainte (3).

5. Garniture enfichable selon l'une quelconque des revendications 1 à 4, caractérisée en ce que le bord extrême du cône externe (19) sur la zone d'extrémité côté boîtier du manchon (1) et le bord extrême du cône interne (34) de la pince de contrainte (3) se recouvrent partiellement à l'état encliqueté.